# EUROPÄISCHE PATENTANMELDUNG

(11) **EP 4 067 640 A1**
(43) Veröffentlichungstag der Anmeldung: **05.10.2022**
(21) Anmeldenummer: 22162961.1
(22) Anmeldetag: 18.03.2022
(51) Int. Cl.: F03B 17/06, F03B 13/26

(54) **MEERESSTRÖMUNGSKRAFTWERK**

(30) Priorität: 01.04.2021 DE 102021108337; 19.11.2021 DE 102021130303
(71) Anmelder: ArianeGroup GmbH, 82024 Taufkirchen (DE)
(72) Erfinder: Matthias, Kay, 28199 Bremen (DE)
(74) Vertreter: Marschall, Stefan

(57) **Zusammenfassung**

Offenbart ist ein Meeresströmungskraftwerk 1, das einen elektrischen Generator 22 und eine Turbine mit einem Stator 30 und einem um den Stator herum rotierbaren Rotor 10 zum Antreiben des elektrischen Generators 22 umfasst. Der Rotor weist dabei eine Mehrzahl an Rotorarmen 11 auf, die jeweils eine Trägereinrichtung 12 und mehrere an der Trägereinrichtung verschwenkbar gelagerte Rotorblätter 14 aufweisen.

## Beschreibung

Die vorliegende Erfindung betrifft ein Meeresströmungskraftwerk mit einem elektrischen Generator zum Erzeugen von elektrischem Strom sowie mit einer Turbine, die einen Stator und einen um den Stator herum rotierbaren Rotor zum Antreiben des elektrischen Generators umfasst.

Mit der Zielsetzung einer möglichst umweltfreundlichen Erzeugung und zugleich zuverlässigen Bereitstellbarkeit von elektrischem Strom wurden und werden verschiedene Ansätze verfolgt und zugehörige Technologien (weiter)entwickelt. Neben der jeweiligen Energie beispielsweise von Sonne, Wind, Erdwärme und Flüssen können damit auch die durch Wellen und Gezeiten bedingten Meeresbewegungen zur Gewinnung elektrischen Stroms nutzbar gemacht werden.

So erzeugen Meeresströmungskraftwerke mittels einer in der natürlichen Meeresströmung angeordneten Turbine Elektrizität. Zu den entscheidenden Vorteilen derartiger Kraftwerke zählt die Tatsache, dass Meeresströmungen kontinuierlich fließen und ein jeweiliges Meeresströmungskraftwerk demgemäß zuverlässig elektrischen Strom liefern kann. So lässt sich auch die Qualität eines jeweiligen Standortes gut einschätzen. Darüber hinaus benötigen Meeresströmungskraftwerke im Vergleich zu Windkraftanlagen nur relativ geringe Strömungsgeschwindigkeiten, weil die Dichte von Wasser wesentlich größer ist als diejenige von Luft.

Um eine Durchmischung des Wassers mit Luft, damit ein Sinken der Dichte des strömenden Fluids und so einen Leistungseinbruch zu verhindern, werden Meeresströmungskraftwerke häufig so installiert, dass sie vollständig in das umgebende Wasser eintauchen; auf diese Weise werden zugleich korrosionsbedingte Probleme reduziert.

Die Installation derartiger Anlagen ist jedoch wasser- und stahlbautechnisch aufwendig, weil Bauarbeiten auf offener See oder in Flussmündungen anspruchsvoll sind und die jeweils eingesetzten Baumaterialien unterwassertauglich und gegen Salzangriff gerüstet sein müssen. Zudem ist die Wartung solcher unter Wasser befindlichen Kraftwerke aufgrund der schwierigen Erreichbarkeit aufwendig.

Andere Kraftwerke, die Meeresbewegungen in elektrische Energie umwandeln, sind mindestens teilweise an oder über der Wasseroberfläche angeordnet und dazu eingerichtet, neben der Meeresströmung auch Wellenbewegungen auszunutzen.

Beispielsweise ist aus der GB 2 431 437 A eine Vorrichtung zur Erzeugung von elektrischer Energie aus Wellenhub und Meeresströmung bekannt. Die Vorrichtung umfasst dabei zwei propellerartige Rotoren mit horizontal verlaufenden Rotationsachsen sowie einem Auftriebselement.

Zudem ist im deutschen Patent DE 10 2013 019 229 B4 ein schwimmender Gezeitengenerator für die Erzeugung elektrischer Energie aus dem Wellenhub und aus der Meeresströmung offenbart.

Weiterer Stand der Technik ist unter www.slimlife.eu/wellengenerator.html zu finden sowie aus der Druckschrift US 2004/0 007 881 A1 bekannt.

Der vorliegenden Erfindung liegt die Aufgabe zugrunde, eine Technik für ein alternatives Meeresströmungskraftwerk bereitzustellen, die insbesondere einen vergrößerten Leistungsbereich und eine vereinfachte Installation ermöglicht.

Die Aufgabe wird gelöst durch ein Meeresströmungskraftwerk gemäß Anspruch 1. Vorteilhafte Ausführungsformen sind in den Unteransprüchen, der Beschreibung und den Figuren offenbart.

Ein erfindungsgemäßes Meeresströmungskraftwerk weist einen elektrischen Generator und eine Turbine auf, die einen Stator und einen um den Stator herum rotierbaren Rotor umfasst.

Eine zentrale Längsachse des Stators bildet dabei vorzugsweise die Rotationsachse des Rotors; in einer vorgesehenen Verwendungsausrichtung des Meeresströmungskraftwerks hat die Rotationsachse des Rotors vorzugsweise eine vertikale Richtungskomponente, insbesondere kann sie vertikal oder zumindest annähernd vertikal (beispielsweise vertikal +/- 15°) verlaufen. Der Rotor ist dazu eingerichtet, den elektrischen Generator anzutreiben, beispielsweise durch Drehen eines Zahnrades an einer Antriebswelle des Generators, der dann die Rotation der Antriebswelle in elektrische Energie umwandelt.

Der Rotor umfasst eine Mehrzahl an Rotorarmen, die jeweils eine Trägereinrichtung und mehrere an der Trägereinrichtung (relativ zu dieser) verschwenkbar gelagerte Rotorblätter aufweisen.

Die Rotorarme dienen somit der Erzeugung des Schubs, durch den der Rotor zum Rotieren gebracht wird. Die Mehrzahl an Rotorblättern ermöglicht dabei eine besonders große Energieaufnahme. Insbesondere kann die Effizienz der Rotorblätter aufgrund ihrer Verschwenkbarkeit durch eine jeweilige Ausrichtung optimiert werden, was auch den Einsatz besonders langer Rotorarme erlaubt. So ermöglicht ein erfindungsgemäßes Meeresströmungskraftwerk einen besonders großen Leistungsbereich und ist auch in Bereichen effizient einsatzbar, in denen die Meeresströmung nur relativ geringe Geschwindigkeiten erreicht. Dabei weist das Meeresströmungskraftwerk einen einfachen Aufbau mit einer relativ geringen Anzahl an Komponenten auf und ist damit besonders gut zu installieren und annähernd zu warten.

Die Rotorarme eines erfindungsgemäßen Meeresströmungskraftwerks weisen vorzugsweise alle dieselbe Anzahl an Rotorblättern auf, beispielsweise mindestens zwei, mindestens drei oder mindestens vier Rotorblätter und/oder höchstens sechs, höchstens fünf oder höchstens vier Rotorblätter.

Insbesondere sind mindestens zwei oder sogar alle Rotorarme eines erfindungsgemäßen Meeresströmungskraftwerks vorzugsweise einander (im Wesentlichen, insbesondere in Bezug auf ihre technischen Aspekte) gleich ausgebildet.

Die Trägereinrichtung eines, mehrerer oder aller Rotorarme kann beispielsweise einen Rahmen ausbilden. Ein solcher Rahmen kann eines oder mehrere der an ihm gelagerten Rotorblätter mindestens teilweise umlaufen. Zur Lagerung der jeweiligen Rotorblätter kann die Trägereinrichtung Lagerungsbuchsen und/oder Lagerzapfen aufweisen, die vorzugsweise jeweils dazu eingerichtet sind, mit jeweiligen Lagerzapfen bzw. Lagerungsbuchsen an den Rotorblättern in Wirkverbindung zu stehen. Dies ermöglicht einen besonders einfachen und soliden Aufbau.

Für eines, mehrere oder alle der Rotorblätter eines, mehrerer oder aller Rotorarme kann die jeweilige Schwenkachse (um die das jeweilige Rotorblatt verschwenkbar ist) vorzugsweise geneigt, insbesondere orthogonal zur Längserstreckung des jeweiligen Rotorarms verlaufen; insbesondere kann der Rotor so ausgebildet sein, dass die Schwenkachse/n eines oder mehrerer der Rotorblätter bei Verwendung des Meeresströmungskraftwerks vertikal verläuft.

Vorzugsweise sind die Rotorarme so ausgebildet, dass ihre jeweilige Trägereinrichtung bei Verwendung des Meeresströmungskraftwerks waagerecht im Wesentlichen (beispielsweise +/- 15cm oder +/- 10cm) an der Wasseroberfläche liegt.

Gemäß vorteilhaften Ausführungsformen der vorliegenden Erfindung umfasst der Rotor eines erfindungsgemäßen Meeresströmungskraftwerks beispielsweise vier, fünf, sechs, sieben oderacht Rotorarme.

Eines, mehrere oder alle Rotorblätter mindestens eines der Rotorarme weist/weisen vorzugsweise eine elliptische Blattform, insbesondere im Querschnitt ein NACA-Profil auf. Derartige Rotorblätter sind insbesondere hinsichtlich ihrer Durchbiegung vorteilhaft.

Ein Rotorblatt oder mehrere Rotorblätter wenigstens eines der Rotorarme kann/können zumindest teilweise hohl, insbesondere beispielsweise mit Luft oder sonstigem Gas gefüllt sein. Dabei kompensiert ein Ballastgewicht des/der jeweiligen Rotorblatts/Rotorblätter bei Verwendung des Meeresströmungskraftwerks vorzugsweise seinen/ihren Auftrieb im Wasser. Insbesondere sind die Rotorblätter wenigstens eines Rotorarmes vorzugsweise auftriebslos ausbalanciert an der Trägereinrichtung des Rotorarmes gehaltert.

Die Verschwenkbarkeit der Rotorblätter ist vorzugsweise beschränkt; ausgehend von einer Ausrichtung orthogonal zu einer Längserstreckung eines jeweiligen Rotorarmes (als unverschwenkte Stellung) kann so insbesondere eine Verschwenkung (in beide Verschwenkungsrichtungen, also zu jeder Seite) auf je höchstens 45°, je höchstens 40° oder je höchstens 30° beschränkt sein. Die Beschränkung bedeutet eine vorteilhafte Stabilisierung einer jeweiligen Rotorblattstellung bei extremaler Verschwenkung, und die genannten Winkel ermöglichen für die Effizienz der Turbine besonders vorteilhafte Ausrichtungen der Rotorblätter.

Gemäß vorteilhaften Ausführungsformen eines erfindungsgemäßen Meeresströmungskraftwerks umfasst/umfassen einer, mehrere oder jeder der Rotorarme eine Schwenkeinrichtung, die dazu eingerichtet ist, mehrere oder alle Rotorblätter des jeweiligen Rotorarms simultan zu verschwenken. Im Falle, dass mehrere der Rotorarme eine Schwenkeinrichtung umfassen, sind die jeweiligen Schwenkeinrichtungen vorzugsweise gleich ausgebildet. Die Verschwenkbarkeit mehrerer Rotorblätter durch eine gemeinsame Schwenkeinrichtung ermöglicht einen besonders einfachen Aufbau des jeweiligen Rotorarms.

Insbesondere kann die jeweilige Schwenkeinrichtung vorzugsweise rein mechanisch ausgebildet sein. Sie kann beispielsweise mindestens eine Schubstange umfassen, die an den jeweiligen Rotorblättern, insbesondere mindestens einem daran vorzugsweise ausgebildeten Steuerzapfen angreift.

Eine solche Schwenkeinrichtung kann vorzugsweise in Abhängigkeit von einer jeweils aktuellen Umlaufposition (relativ zum Stator) des jeweiligen Rotorarmes einstellbar sein, so dass also an mindestens zwei verschiedenen Umlaufpositionen des Rotorarmes voneinander verschiedene Verschwenkungen eingestellt werden; die Umlaufposition kann dabei beispielsweise durch einen jeweiligen Winkel zu einer festgelegten Ausgangsposition des Rotorarmes gegeben sein. Auf diese Weise lassen sich die jeweiligen Rotorblätter insbesondere geeignet in Bezug auf die jeweilige Richtung ausrichten, aus der das strömende Meerwasser auf sie trifft. Vorzugsweise umfasst das Meeresströmungskraftwerk mindestens eine Schwenkeinstellungseinrichtung, die dazu eingerichtet ist, die Schwenkeinrichtung/en entsprechend einzustellen.

Die Einstellung der Schwenkeinrichtung und damit der Rotorblätter des zugehörigen Rotorarmes erfolgt bei derartigen Ausführungsformen also entsprechend einer (mathematischen) Funktion, die jeder Umlaufposition (als Variable) des jeweiligen Rotorarmes einen Winkel zuordnet, um den ein jeweiliges, zum Rotorarm gehöriges Rotorblatt in Bezug auf eine Ausgangsstellung verschwenkt wird. Vorzugsweise ist diese Funktion kontinuierlich. Gemäß vorteilhaften Ausführungsformen ist die Funktion 2n-periodisch (also zyklisch) bzw. periodisch mit Periode 360°, so dass also wiederkehrende Umlaufpositionen für den Rotorarm immer wieder dieselbe Schwenkstellung nach sich ziehen.

In Ausführungsformen mit mehreren Schwenkeinrichtungen können diese vorzugsweise durch eine gemeinsame solche Schwenkeinstellungseinrichtung simultan einstellbar sein. Vorzugsweise führen dabei gleiche Umlaufpositionen der Rotorarme zu gleichen Einstellungen der zugehörigen Schwenkeinrichtungen, ist also eine jeweilige Verschwenkung der Rotorblätter unabhängig vom jeweils an einer Umlaufposition befindlichen Rotorarm, zu dem sie gehören.

Gemäß vorteilhaften Ausführungsvarianten ist die mindestens eine Schwenkeinstellungseinrichtung rein mechanisch ausgebildet; dies ermöglicht eine besonders einfache Bauweise. Die mindestens eine Schwenkeinstellungseinrichtung kann beispielsweise eine Schiene und/oder Rinne umfassen, mit der die jeweilige Schwenkeinrichtung in Wirkverbindung stehen, in die sie beispielsweise eingreifen kann. Im Folgenden wird eine solche Schiene als "Steuerungsschiene" bzw. eine solche Rinne als "Steuerungsrinne" bezeichnet.

Insbesondere kann eine solche Steuerungsschiene bzw. Steuerungsrinne vorzugsweise um die Rotationsachse des Rotors herum verlaufen. Dabei kann sie im Umlauf einen sich verändernden Abstand zur Rotationsachse haben, also Stellen mit voneinander verschiedenem Abstand zur Rotationsachse aufweisen. So kann auf besonders einfache und robuste Weise die Einstellung besonders vorteilhafter Winkel der Rotorblattflächen zur Anströmrichtung abhängig von der jeweils aktuellen Umlaufposition realisiert werden.

Gemäß vorteilhaften Ausführungsformen umfasst ein erfindungsgemäßes Meeresströmungskraftwert eine Verstelleinrichtung, die dazu eingerichtet ist, den Rotor an mit Gezeitenwechsel alternierende Anströmrichtungen anzupassen. In entsprechenden Ausführungen mit Schwenkeinstellungseinrichtung/en, wie sie u.a. oben beschrieben sind, kann eine solche Verstelleinrichtung insbesondere dazu eingerichtet sein, die Schwenkeinstellungseinrichtung/en alle sechs Stunden um 180° um die Rotationsachse des Rotors zu drehen und dort zu arretieren. So kann das Meeresströmungskraftwerk sowohl bei auflaufendem als auch bei ablaufendem Wasser optimal eingestellt werden.

Die Verstelleinrichtung kann dabei elektrisch angetrieben werden, beispielsweise mittels eines Bordstromnetzes; das Meeresströmungskraftwerk kann dazu dann eine Batterie und/oder einen Akkumulator zur Versorgung der Verstelleinrichtung umfassen. So kann die Verstellung mit bei Tidenwechsel unbetriebenem Generator erfolgen.

Gemäß vorteilhaften Ausführungsformen eines erfindungsgemäßen Meeresströmungskraftwerks ist einer, mehrere oder jeder der Rotorarme an einem zentralen Element des Rotors befestigt, beispielsweise eingehängt; das zentrale Element wird im Folgenden hier auch als "Rotator" bezeichnet.

Vorzugsweise weist die Trägereinrichtung mindestens eines der Rotorarme in ihrer Längserstreckung vom Stator weg.

Gemäß vorteilhaften Ausführungsformen sind die Rotorarme gleichmäßig um den Stator bzw. - in entsprechenden Ausführungsformen - um den Rotator herum angeordnet, weisen die Rotorarme also einen einheitlichen Abstand voneinander auf. Insbesondere kann der Rotor sternförmig mit vom Stator bzw. vom Rotator nach radial außen verlaufenden Rotorarmen ausgebildet sein; die Angabe "radial" bezieht sich in dieser Schrift stets auf die vorgesehene Rotationsachse des Rotors.

Vorzugsweise ist mindestens einer der Rotorarme in Richtung parallel zur vorgesehenen Rotationsachse des Rotors um einen (maximalen) Ausschlagswinkel ϕ ausschwenkbar.

Eine zugehörige Schwenkachse liegt dabei vorzugsweise an einem radial inneren Ende des jeweiligen Rotorarmes. Beim montierten Meeresströmungskraftwerks, bei dem die vorgesehene Rotationsachse vorzugsweise vertikal verläuft, sind dann die Rotorarme nach oben/unten ausschwenkbar. Die Ausschwenkbarkeit kann begrenzt sein, beispielsweise mittels mindestens eines hydraulischen Dämpfers. Sieermöglicht, dass der Rotor Wellenbewegungen aufnimmt. Dadurch können eine Auslastung des Rotors verbessert und auftretende Belastungen verringert werden, zudem kann damit insbesondere bei an der Wasseroberfläche schwimmendem Rotor sichergestellt werden, dass der Rotorarm zumindest annähernd permanent von oberhalb der Wasseroberfläche identifizierbar ist, was die Vermeidung von Kollisionen mit Wasserfahrzeugen erleichtert.

Insbesondere gilt für den maximal möglichen Ausschlagswinkel ϕ vorzugsweise ϕ ≥ arcsin(2/A) oder ϕ ≥ arcsin(3/A) oder sogar ϕ ≥ arcsin(5/A); dabei ist A die betragsmäßige Länge des mindestens einen Rotorarms in Metern. Derartige Winkel ermöglichen die Aufnahme von Wellen mit Wellenhöhen von 2m, 3m bzw. 5m.

Ein Meeresströmungskraftwerk derartiger Ausführungsformen kann mindestens einen Wellengenerator in Form einer Hydraulikanlage umfassen, die dazu eingerichtet ist, durch jeweilige Ausschwenkungen des Rotorarms/der Rotorarme bedrückt zu werden und damit eine jeweilige Wellenenergie in elektrische Energie umzuwandeln. Damit kann die Leistung Effizienz des Meeresströmungskraftwerks zusätzlich gesteigert werden.

Ein erfindungsgemäßes Meeresströmungskraftwerk kann einen oder mehrere Auftriebskörper umfassen, der/die dazu eingerichtet ist/sind, ein oder mehrere Element/e des Meeresströmungskraftwerks an einer Wasseroberfläche schwimmend zu halten. Insbesondere kann auf diese Weise eine jeweilige Position des Rotors automatisch an den sich mit den Gezeiten ändernden Wasserspiegel angepasst werden. Damit kann zum einen immer eine optimale Effizienz des Meeresströmungskraftwerks gewährleistet werden, zum anderen ermöglicht das Schwimmen eine ständige Sichtbarkeit des Meeresströmungskraftwerks von oberhalb der Wasseroberfläche und damit eine erhöhte Sicherheit in Bezug auf die Schifffahrt. Insbesondere kann der Auftriebskörper beispielsweise dazu eingerichtet sein, am installierten Meeresströmungskraftwerk bei Ruhelage des Rotors höchstens mit 80%, höchstens mit 65% oder mit höchstens 50% seines Volumens ins Wasser einzutauchen. Er kann beispielsweise als hohler Körper ausgebildet sein, der mindestens teilweise aus Schiffbaustahl gefertigt ist.

Der Stator wirkt in derartigen Ausführungsformen vorzugsweise als Führung für den schwimmenden, mit sich änderndem Wasserstand also jeweils aufsteigenden oder absinkenden Rotor.

Der Auftriebskörper bzw. - im Falle, dass das Meeresströmungskraftwerk mehrere Auftriebsköper umfasst - mindestens einer der Auftriebskörper kann vorzugsweise als Teil des Rotors ausgebildet sein, also dazu eingerichtet sein, um den Stator rotieren. Er kann insbesondere ringförmig um den Stator herum ausgebildet sein. In entsprechenden Ausführungsformen mit Rotator (wie oben erwähnt) kann ein solcher Auftriebskörper insbesondere am Rotator fixiert sein.

Alternativ oder zusätzlich kann der Auftriebskörper bzw. mindestens ein solcher Auftriebskörper an einer Trägereinrichtung eines (jeweiligen) der Rotorarme und/oder an mindestens einem der Rotorblätter fixiert sein, insbesondere eine Komponente des Rotorarms darstellen. In Ausführungsformen, bei denen mindestens einer der Rotorarme (wie oben beschrieben) in Richtung parallel zur Rotationsachse des Rotors ausschwenkbar an einem Rotator (als einem zentralen Element) des Rotors befestigt ist, kann so der Auftriebskörper das Ausschwenken bewirken oder zumindest unterstützen. Vorzugsweise ist der jeweilige Auftriebskörper bei derartigen Ausführungsvarianten mindestens zum Teil an einem radial äußeren Ende des zugehörigen Rotorarms angeordnet. Dies ermöglicht insbesondere eine Wahrnehmbarkeit dieses Endes von oberhalb des Wasserspiegels und damit eine Erfassbarkeit der Dimension des Meeresströmungskraftwerks in seinem vollen Umfang. Insbesondere kann vorzugsweise an jedem der Rotorarme ein eigens ihm zugehöriger Auftriebskörper fixiert sein.

Insbesondere vorteilhaft sind Ausführungsformen eines erfindungsgemäßen Meeresströmungskraftwerks, bei denen je mindestens ein Auftriebskörper an jedem Rotorarm und an einem Rotator fixiert ist, an dem die Rotorarme befestigt sind. Dies sichert eine Schwimmfähigkeit dieser Bauteile, auch wenn sich ihre Verbindung untereinander lösen sollte.

Der Stator eines erfindungsgemäßen Meeresströmungskraftwerks kann einen (ein- oder mehrteiligen, vorzugsweise mindestens teilweise hohlen und/oder mindestens teilweise massiven) Mast umfassen. Ein solcher Mast kann starr ausgebildet sein; alternativ kann er ein, zwei oder mehr Gelenke aufweisen. Derartige Gelenke ermöglichen ein vorteilhaftes Aufnehmen eines Kippmoments, das insbesondere bei Hochwasser aus der auf der Anlage liegenden kinetischen Energie der Anströmfläche resultieren kann.

Gemäß vorteilhaften Ausführungsformen besteht ein solcher Mast zumindest teilweise aus Schiffbaustahl. Mindestens in einem Bereich kann der Stator vorzugsweise an seiner Umfangsfläche eine Zahnradstruktur aufweisen; insbesondere in Ausführungsformen mit einer Verstelleinrichtung (wie oben beschrieben) kann der Stator so als Widerlager für mindestens ein vorzugsweise zur Verstelleinrichtung gehöriges Zahnrad dienen.

Vorzugsweise umfasst der Stator einen Fuß zur Verankerung am Meeresboden oder auf einer dort installierten bzw. zu installierenden Gründung (beispielsweise mindestens teilweise aus Stahlbeton), die ebenfalls zum Stator gehören kann. Ein solcher Fuß kann beispielsweise sternartig und/oder als Flansch (z.B. eines Mastes wie oben genannt) ausgebildet sein. Sofern der Stator einen Mast mit einem oder mehreren Gelenken umfasst (wie oben erwähnt), kann ein solches Gelenk an der Gründung und/oder ein (ggf. anderes) solches Gelenk an einem der Gründung zugewandten Seite der Zentraleinheit montiert sein.

Gemäß vorteilhaften Ausführungsformen umfasst ein erfindungsgemäßes Meeresströmungskraftwerk mindestens eine Sensoreinrichtung zur Erfassung
a) von meteorologischen Daten (wie z.B. einer jeweils aktuellen Windstärke, Windrichtung, Lufttemperatur, Wassertemperatur, Wellenhöhe und/oder Wellenrichtung),
b) von Schiffssicherheitsdaten (z.B. einer GPS-Position, einer jeweils aktuellen Wasserstandshöhe (entspricht einer Neigung der Tragarme), Lagerichtung (Kompass), eines jeweils aktuellen Krängungswinkels (entspricht einer Querneigung) und/oder von Daten einer Wassereinbruchssensorik),
c) von Leistungsdaten des elektrischen Generators (z.B. eines jeweils aktuellen Drehmoments pro Rotor, und/oder einer jeweils aktuellen Drehzahl pro Rotor, einer errechneten mechanischen Leistung pro Rotor und/oder einer elektrischen Leistung pro Rotor),
d) von Strömungsdaten (wie Anströmungsdaten und/oder Anströmungsstärke) und/oder
e) - in entsprechenden Ausführungsformen mit mindestens einem Wellengenerator wie oben erwähnt - von Leistungsdaten des Wellengenerators (wie z.B. umgesetzter Kraft pro Wellengenerator, elektrischer Leistung pro Wellengenerator und/oder umgesetzter Kraft pro ggf. umfasstem hydraulischem Dämpfer).

Vorzugsweise umfasst das Meeresströmungskraftwerk eine Steuerungselektronik mit mindestens einem Bordrechner sowie mindestens einem Sender zur Übermittlung von Daten des Bordrechners an mindestens eine Empfangsstation an Land. Derart zu übermittelnde Daten können in entsprechenden Ausführungsformen insbesondere z.B. jeweils erfasste Werte der mindestens einen Sensoreinrichtung umfassen, die ebenfalls zur Steuerungselektronik gehören kann.

Gemäß vorteilhaften Ausführungsformen umfasst ein Meeresströmungskraftwerk gemäß der vorliegenden Erfindung eine elektrische Leitung mit Seekabelanschluss; über ein damit anzuschließendes Seekabel kann die Einspeisung durch das Meeresströmungskraftwerk erzeugten elektrischen Stroms in ein Netz an Land erfolgen. Die elektrische Leitung kann außen am Stator entlang verlegt und/oder durch ein Inneres des Stators verlaufen; vorzugsweise führt sie durch eine/die Gründung des Stators.

Der Stator kann insbesondere Teil einer Zentraleinheit des Meeresströmungskraftwerks sein, die weiterhin eine Elektronik sowie - jeweils in entsprechenden Ausführungsformen - die oben genannte Schwenkeinstellungseinrichtung (zum Einstellen der Schwenkeinrichtung/en), den oben genannten Rotator (an dem mindestens einer der Rotorarme befestigt sein kann) und/oder die Verstelleinrichtung (zum Anpassen des Meeresströmungskraftwerks an alternierende Anströmrichtungen), insbesondere einen vorzugsweise dazu gehörigen Verstellmotor und ein Eigenstromnetz mit Batterie/ Akkumulator zu dessen Versorgung umfassen kann. Zu der Elektronik gehört bei solchen Ausführungsformen beispielsweise der elektrische Generator (vorzugsweise mit einer zugehörigen Über- und/oder Untersetzung); darüber hinaus kann die Elektronik in entsprechenden Ausführungsformen vorzugsweise die oben genannte Steuerungselektronik und/oder den oben genannten Seekabelanschluss jeweils mindestens teilweise umfassen.

Vorzugsweise umfasst die Zentraleinheit in derartigen Ausführungsformen ein Gehäuse, das die Elektronik vorzugsweise vollständig umgibt. Dabei gewährleistet das Gehäuse vorzugsweise Wasserdichtigkeit zur Elektronik.

Das Gehäuse ist dabei vorzugsweise dazu eingerichtet, mindestens teilweise aus der Wasseroberfläche herauszuragen. In Ausführungsformen mit einem oder mehreren Auftriebskörpern kann mindestens ein solcher Auftriebskörper in einem vom Gehäuse umgebenden Raum angeordnet sein.

Gemäß vorteilhaften Ausführungsformen ist die Zentraleinheit schwimmfähig ausgebildet. Sie hat dann also einen eigenen Auftrieb und eine vorgesehene Wasserlinie. Vorzugsweise ist die vorgesehene Wasserlinie dabei so, dass die mechanisch drehenden Teile, insbesondere der Rotator, auf gleicher Ebene knapp unter der Wasserlinie bleiben.

Insbesondere kann es in entsprechenden Ausführungsformen fest mit der Schwenkeinstellungseinrichtung verbunden sein, an der vorzugsweise mindestens ein Schwimmkörper befestigt ist. In Ausführungsformen mit sowohl einer Verstelleinrichtung als auch einer einen Seekabelanschluss aufweisenden elektrischen Leitung weist die elektrische Leitung vorzugsweise in dem Gehäuse eine Kabelwendel auf, die für die wechselseitigen Verstellungen um 180° ausgelegt ist.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine exemplarische Ausführungsform eines erfindungsgemäßen Meeresströmungskraftwerks in einer Schnittansicht von einer Seite;
- Figur 2:: eine Zentraleinheit eines exemplarischen erfindungsgemäßen Meeresströmungskraftwerks aus einer Richtung senkrecht zur Rotationsachse.
- Figur 3:: eine Zentraleinheit eines Ausführungsbeispiels eines erfindungsgemäßen Meeresströmungskraftwerks im Bereich des Rotators in einer Schnittdarstellung orthogonal zur Rotationsachse des Rotors;
- Figur 4:: einen Rotorarm eines Ausführungsbeispiels eines erfindungsgemäßen Meeresströmungskraftwerks mit einer Schwenkeinrichtung;
- Figur 5:: ein Rotorblatt eines exemplarischen erfindungsgemäßen Meeresströmungskraftwerks mit Rotorblattaufhängung an einem Rotorarm;
- Figur 6a:: den Rotor eines exemplarischen erfindungsgemäßen Meeresströmungskraftwerks mit Blickrichtung entlang der Rotationsachse;
- Figur 6b:: eine Illustration der Funktionsweise einer Schwenkeinstellungseinrichtung eines Ausführungsbeispiels eines erfindungsgemäßen Meeresströmungskraftwerks; und
- Figur 7:: einen Teil eines exemplarischen erfindungsgemäßen Meeresströmungskraftwerks mit Wellengenerator.

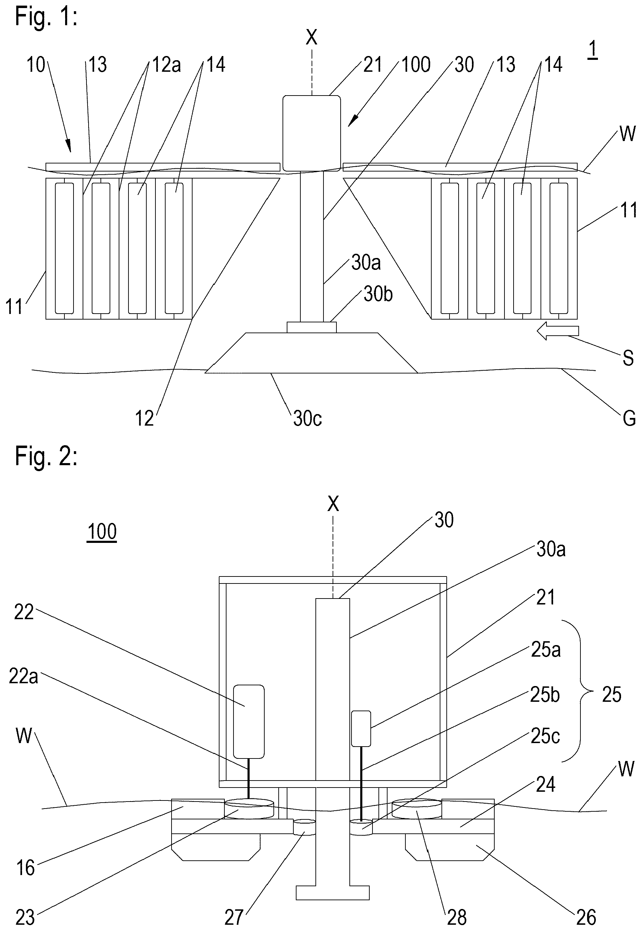

In Figur 1 ist ein Ausführungsbeispiel eines erfindungsgemäßen Meeresströmungskraftwerks 1 in einer Schnittansicht aus einer Richtung senkrecht zur vorliegend vertikal ausgerichteten Rotationsachse X und in einer vorgesehenen Verwendungsausrichtung auf dem Meeresgrund G stehend dargestellt. Eine Anströmrichtung S verläuft dabei vorliegend horizontal und damit insbesondere senkrecht zur Rotationsachse X.

Das Meeresströmungskraftwerk 1 umfasst einen elektrischen Generator, der vorliegend in einem Gehäuse 21 einer Zentraleinheit 100 angeordnet und in der Figur 1 nicht sichtbar ist. Darüber hinaus umfasst das Meeresströmungskraftwerk 1 eine Turbine mit einem Rotor 10 und einem unbeweglichen Stator 30, der vorliegend als ein starrer Mast 30a mit einem Flansch als Fuß 30b zur Verankerung auf einer Gründung 30c ausgebildet ist.

Vorzugsweise weist der Mast 30a mindestens bereichsweise an seiner Umfangsfläche eine Zahnradstruktur auf, ist dort also als eine Zahnwelle ausgebildet (in der Figur nicht sichtbar).

Bei einem montierten Meeresströmungskraftwerk 1 ist eine (in Richtung der Rotationsachse X gemessene) Länge des Mastes 30a vorzugsweise an die Verlegungsstelle angepasst, insbesondere an eine dort vorliegende Wassertiefe bei Seekartennull, einen dort auftretenden Tidenhub, einen vorbestimmten Sicherheitsfaktor. Diese Parameter bestimmen zudem eine erforderliche Länge des Mastes 30a im Vergleich zu einer Höhe des Gehäuses 21.

Insbesondere kann eine Länge des Mastes 30a mindestens 7m, mindestens 8m oder mindestens 9m und/oder höchstens 15m, höchstens 13m oder höchstens 11m betragen. Damit kann vorteilhaft eine Montage an verschiedenen geeigneten Verlegungsstellen ermöglicht werden. Ein Durchmesser des Mastes 30a orthogonal zur Längsachse kann vorzugsweise mindestens 30cm oder mindestens 40cm betragen und/oder höchstens 70cm oder höchstens 60cm.

Der Mast 30a kann insbesondere aus Schiffbaustahl hergestellt sein. Die Gründung 30c ist vorzugsweise mindestens teilweise aus Stahlbeton ausgebildet. Am Meeresgrund G weist sie vorzugsweise einen Durchmesser von 4m bis 8m, insbesondere von 5m bis 7m auf. In ihr kann ein Seekabelanschluss eingebettet sein.

Der Rotor 10 des Meeresströmungskraftwerks 1 umfasst mehrere Rotorarme 11, beispielsweise vier, fünf, sechs, sieben oder acht Rotorarme. In der Figur 1 sind zwei Rotorarme 11 sichtbar.

Die Rotorarme 11 umfassen dabei jeweils eine Trägereinrichtung 12, die vorliegend in ihrer Längserstreckung vom Stator 30 weg weist; insbesondere verläuft ihre Längserstreckung im dargestellten Fall radial (bezogen auf die vorgesehene Rotationsachse X des Rotors 10). An der Trägereinrichtung 12 ist jeweils ein Auftriebskörper 13 fixiert, der in Verwendung des Meeresströmungskraftwerks 1 an der Wasseroberfläche W schwimmt, so den jeweiligen Rotorarm 10 auf einer gleichbleibenden Wassertiefe hält und insbesondere für die Schifffahrt sichtbar ist. Die Auftriebskörper 13 sind jeweils beweglich an der Zentraleinheit 100 befestigt, beispielsweise aufgehängt.

Im dargestellten Ausführungsbeispiel erstrecken sich die Auftriebskörper 13 jeweils über die Länge des jeweiligen Rotorarms 10 bis an einen radial äußeren Bereich und zeigt damit eine Ausdehnung des Meeresströmungskraftwerks 1 an. Zur besseren Sichtbarkeit kann mindestens einer der Auftriebskörper 13 farblich markiert sein, beispielsweise mittels einer (z.B. gelben) Markierung. Gemäß vorteilhaften Ausführungsformen ist mindestens einer der Auftriebskörper als ein geschlossener schiffbaulicher Körper ausgebildet. Er kann beispielsweise aus einem konischen Flachovalrohr hergestellt sein. Zur Verbindung mit der Trägereinrichtung 12 kann er mindestens einen Befestigungsflansch aufweisen (in der Figur nicht dargestellt).

Die Trägereinrichtungen 12 der Rotorarme 11 sind vorliegend jeweils als ein Rahmen ausgebildet, der die ebenfalls zum jeweiligen Rotorarm 11 gehörigen mehreren (vorzugsweise mindestens drei und/oder höchstens acht oder höchstens sechs) Rotorblätter 14 umläuft; im dargestellten Ausführungsbeispiel weist jeder Rotorarm 11 vier Rotorblätter 14 auf.

Die Rotorblätter 14 sind jeweils um eine jeweilige Verschwenkungsachse verschwenkbar, die in Längsrichtung des jeweiligen Rotorblatts verläuft. Zur Stabilisierung der Blattlagerungen weisen die Trägereinrichtungen 12 jedes Rotorarmes 10 neben jedem Rotorblatt 14 Verbindungsstreben 12a auf.

Die Trägereinrichtung 12, der Auftriebskörper 13 und/oder die Rotorblätter 14 bestehen vorzugsweise mindestens teilweise aus Schiffbaustahl. Die Lagerungen für die Rotorblätter 14 sind vorzugsweise wenigstens zum Teil aus Edelstahl.

Die Figur 2 zeigt eine Zentraleinheit 100 eines exemplarischen erfindungsgemäßen Meeresströmungskraftwerks aus einer Richtung senkrecht zur Rotationsachse X und gibt dabei Einblick in das Gehäuse 21, das insbesondere einen elektrischen Generator 22 des Meeresströmungskraftwerks umgibt. Gemäß vorteilhaften Ausführungsformen hat das Gehäuse einen runden (kreisförmigen) Querschnitt (senkrecht zur Rotationsachse X). Weitere vorzugsweise umfasste Elemente einer Elektronik, wie beispielsweise eine Steuerungselektronik mit einem Bordrechner, einem Sender zur Datenübermittlung und/oder mindestens einer Sensoreinrichtung können ebenfalls mindestens teilweise innerhalb des Gehäuses 21 angeordnet sein (nicht dargestellt).

Der elektrische Generator 22 wandelt die Rotation einer Antriebswelle 22a, die über ein Zahnrad 23 von einem Rotator 16 als zentralem Element des Rotors angetrieben wird, in elektrische Energie um, die dann vorzugsweise mittels einer nicht dargestellten elektrischen Leitung mit Seekabelanschluss und ein angeschlossenes Seekabel in ein Netz eingespeist werden kann. Der Rotator 16 wird dabei durch in der Figur 2 nicht gezeigte Rotorarme zur Rotation gebracht; die Rotorarme sind am Rotator 16 befestigt, beispielsweise eingehängt und werden ihrerseits durch eine jeweilige Meeresströmung bewegt. Gemäß vorteilhaften Ausführungsformen eines erfindungsgemäßen Meeresströmungskraftwerks wird der Rotator 16 so mit einer Umdrehungsgeschwindigkeit von 50% bis 90%, bevorzugter mit 60% bis 80% einer Anströmungsgeschwindigkeit von 1 m/sek bis 2 m/sek angetrieben.

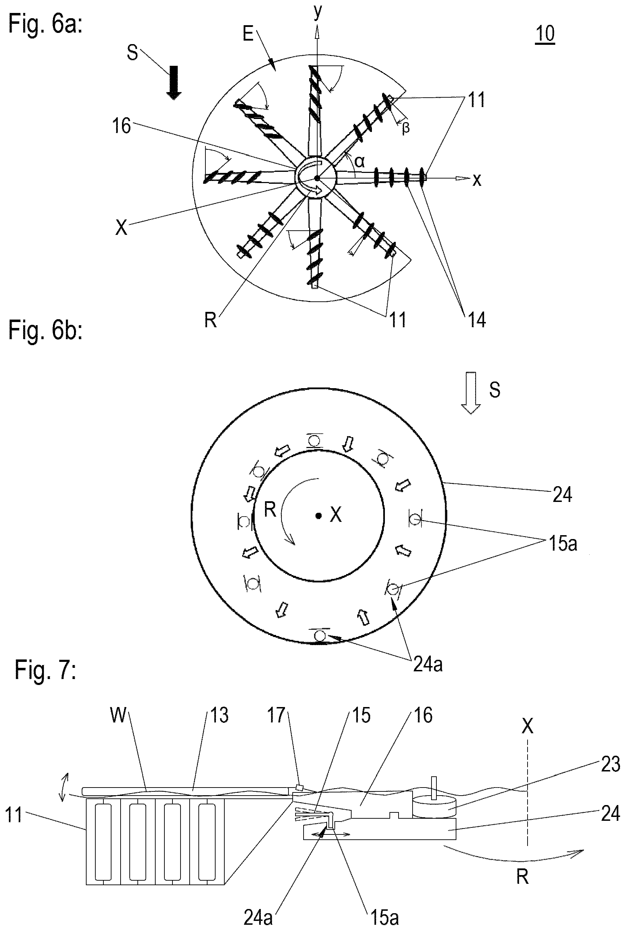

Die Zentraleinheit 100 umfasst weiterhin eine Schwenkeinstellungseinrichtung 24 (vorliegend in Form einer Steuerscheibe) zur Einstellung jeweiliger Schwenkeinrichtungen der Rotorarme in Abhängigkeit von deren jeweils aktueller Umlaufposition, wie es insbesondere mit Bezug auf die Figuren 6a, 6b unten näher erläutert ist. Der Rotator 16 ist dabei relativ zur Schwenkeinstellungseinrichtung 24 drehbar (um die Rotationsachse X). In der dargestellten vorgesehenen Verwendungsausrichtung des Meeresströmungskraftwerks (bzw. seiner Zentraleinheit 100) ist die Schwenkeinstellungseinrichtung 24 vorliegend unterhalb des Rotators 16 angeordnet.

Ebenfalls vom Gehäuse 21 umgeben ist ein Verstellmotor 25a einer Verstelleinrichtung 25, die vorliegend zudem eine Welle 25b und ein Zahnrad 25c umfasst und dazu eingerichtet ist, das Meeresströmungskraftwerk auf mit Gezeitenwechsel alternierende Anströmrichtungen einzustellen, also entsprechend anzupassen. Dazu greift das über die Welle 25b durch den Verstellmotor 25a zur Rotation gebrachte Zahnrad 25c in eine Zahnstruktur in der (radial inneren Oberfläche der Schwenkeinstellungseinrichtung 24 ein, wobei eine Zahnstruktur an einer radial äußeren Oberfläche des Masts 30a des Stators 30 als Widerlager dient. Auf diese Weise wird die Schwenkeinstellungseinrichtung 24 und mit dieser der darauf fixierte Rotator 16 um den Stator 30 gedreht, und zwar vorzugsweise um 180°. Wie insbesondere mit Bezug zu den Figuren 6a, 6b unten detailliert ist, beeinflusst die Stellung der (nicht rotationssymmetrisch ausgebildeten) Schwenkeinstellungseinrichtung 24 zur sich mit dem Gezeitenwechsel ändernden Strömungsrichtung die Schwenkstellungen der jeweiligen Rotorblätter an den Rotorarmen.

Ein weiteres Zahnrad 27 ist im Leerlauf und dient lediglich der Stabilisierung der Schwenkeinstellungseinrichtung 24. Ähnlich ist ein Zahnrad 28 im Leerlauf und dient dabei lediglich einer Stabilisierung des Rotators 16.

Die Zentraleinheit 100 umfasst vorliegend weiterhin einen ringförmigen Auftriebskörper 26, auf dem die Schwenkeinstellungseinrichtung 24 befestigt ist und der dazu eingerichtet ist, diese an einer Wasseroberfläche W schwimmend zu halten. Alternativ oder zusätzlich zum ringförmigen Auftriebskörper 26 kann in dem vom Gehäuse 21 umgebenden Raum ein Auftriebslörper angeordnet sein (nicht dargestellt).

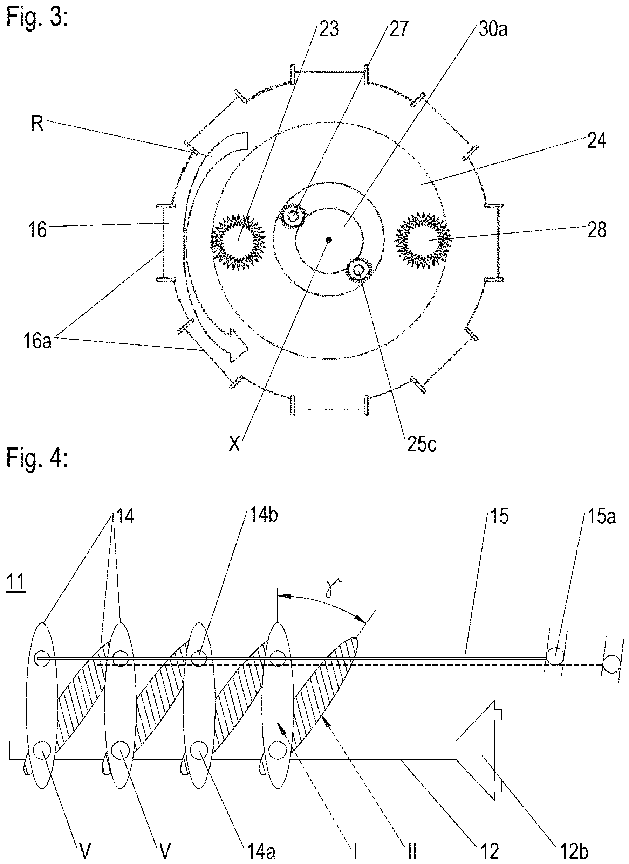

Die Figur 3 zeigt den ringförmigen Rotator 16 aus Richtung des (in der Figur 2 gezeigten) Gehäuses 21 mit der darunterliegenden Schwenkeinstellungseinrichtung 24, dem Mast 30a des Stators 30, dem mit der Antriebswelle des elektrischen Generators verbundenen Zahnrad 23, dem Zahnrad 25c der Verstelleinrichtung 25 sowie den weiteren Zahnrädern 27 und 28. An seinem Außenumfang weist der Rotator 16 vorliegend acht Anschläge 16a für die Verankerung (z.B. mittels Bolzen) nicht dargestellter Rotorarme auf, mittels deren er durch eine Meeresströmung zur Rotation in Umdrehungsrichtung R um die Rotationsachse X gebracht wird. Auftriebskörper an den Rotorarmen sowie der in der Figur 2 gezeigte Auftriebskörper 26 sind dazu eingerichtet, den Rotator 16 an einer Wasseroberfläche, insbesondere auf Wasserlinie zu halten.

An seiner der Rotationsachse X zugewandten Randfläche weist der Rotator 16 eine (in der Figur nicht dargestellte) Zahnstruktur in Form eines Zahnkranzes auf, der in das Zahnrad 23 eingreift und so den (nicht gezeigten) elektrischen Generator über dessen Antriebswelle antreibt.

Die als Scheibe ausgebildete Schwenkeinstellungseinrichtung 24 weist ebenfalls an ihrer der Rotationsachse X zugewandten Randfläche eine (in der Figur nicht gezeigte) Zahnstruktur in Form eines Zahnkranzes auf. Das Zahnrad 25c der Verstelleinrichtung 25 greift in diese Zahnstruktur und zudem in eine Zahnstruktur an der Außenfläche des Masts 30a ein. Bei einer durch den Verstellmotor 25a (siehe Figur 2) bewirkten Rotation des Zahnrads 25c wird so die Schwenkeinstellungseinrichtung 24 (und mit ihm vorzugsweise das Gehäuse 21 und mindestens ein Teil der darin angeordneten Komponenten) um den Mast 30a bzw. die Rotationsachse X gedreht. Auf diese Weise kann das Meeresströmungskraftwerk an mit Gezeitenwechsel alternierende Anströmrichtungen angepasst werden. Bei stillstehendem Verstellmotor im Betrieb des Meeresströmungskraftwerks dient die Verstelleinrichtung 25 zudem einer Arretierung der Schwenkeinstellungseinrichtung 24.

Gemäß vorteilhaften Ausführungsformen umfasst der Rotator 16 einen Stahl-Schmiedering. Im Betrieb des Meeresströmungskraftwerks wird er vorzugsweise durch Auftriebskörper 13 der Rotorarme 11, wie sie die in der Figur 1 gezeigt sind, an der Wasseroberfläche schwimmend gehalten.

Die Figur 4 zeigt schematisch einen Rotorarm 11 mit einer Trägereinrichtung 12, die vorliegend eine verdickte Aufhängung 12b zur Verbindung mit einem (nicht dargestellten) Rotator mittels zweier Bolzen aufweist. An der Trägereinrichtung 12 sind im dargestellten Ausführungsbeispiel vier Rotorblätter 14 jeweils um eine zugehörige Schwenkachse V schwenkbar gelagert; jeweilige Lagerzapfen 14a der Rotorblätter 14 greifen dabei jeweils in eine (nicht dargestellte) Lagerbuchse in Form einer Ausnehmung in der Trägereinrichtung 12 ein.

Die Verschwenkung kann dabei simultan für alle Rotorblätter 14 des Rotorarms 11 mittels einer vorliegend als Schubstange ausgebildeten Schwenkeinrichtung 15 bewerkstelligt werden, die an einem jeweiligen Steuerzapfen 14b jedes der Rotorblätter 14 angreift. Durch eine Verschiebung der Schubstange in Richtung ihrer Längsachse, wie sie in der Figur 4 durch gestrichelte Linien verdeutlich ist, können die Rotorblätter 14 des Rotorarms 11 simultan um ihre jeweilige Schwenkachse V verschwenkt werden. Ein dabei erreichbarer maximaler Schwenkwinkel γ ist vorzugsweise beschränkt; im Vergleich zu einer Stellung I, in der die Rotorblätter quer zu einer Längserstreckung des Rotorarms stehen (unschraffiert in der Figur 4) können sie vorzugsweise um +/-45°, höchstens +/- 40° oder +/-30° verschwenkt werden. In Figur 4 ist eine Stellung II nach maximal möglicher Verschwenkung um den Schwenkwinkel γ von vorliegend 30° durch schraffierte Rotorblätter dargestellt.

Die Bedienung der Schwenkeinrichtung 15 erfolgt dabei vorzugsweise über einen Steuerkopf 15a an ihrem dem (nicht gezeigten) Rotator zugewandten Ende, der in eine als Schwenkeinstellungseinrichtung fungierende Schiene oder Rinne eingreift; dies ist weiter unten anhand der Figur 6b näher erläutert.

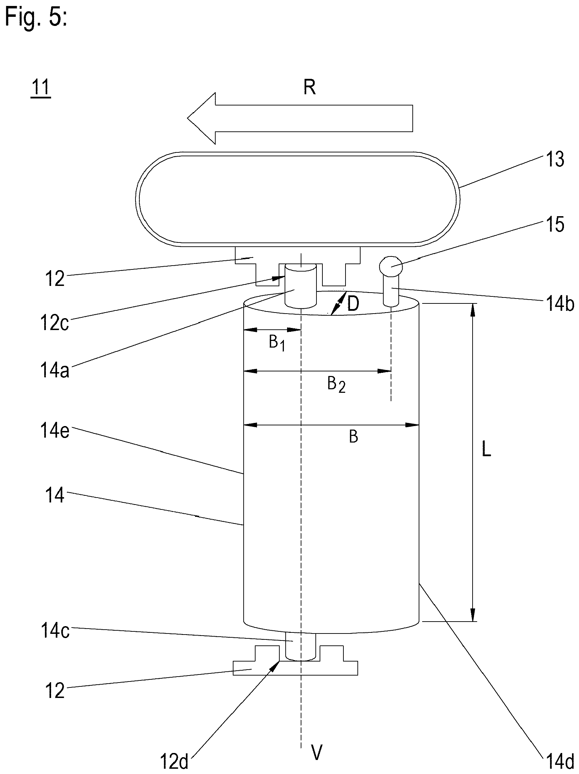

Die Figur 5 zeigt einen Rotorarm 11 eines exemplarischen erfindungsgemäßen Meeresströmungskraftwerks in einer Schnittdarstellung entlang einer Umdrehungsrichtung R des Rotorarms 11 (also senkrecht zu seiner Längsausrichtung). Der Rotorarm 11 ist dabei in einer vorgesehenen Verwendungsausrichtung gezeigt, in welcher der Auftriebskörper 13 oben an der Trägereinrichtung 12 befestigt ist und die Rotorblätter, insbesondere das dargestellte Rotorblatt 14 bezogen auf ihre Längsausrichtung vorzugsweise vertikal verlaufen.

Insbesondere ist in der Figur 5 eine Rotorblattaufhängung des Rotorblatts 14 an der Trägereinrichtung 12 dargestellt: Lagerzapfen 14a, 14c an einander gegenüberliegenden Enden des Rotorblatts 14 greifen dabei jeweils in eine Lagerungsbuchse 12c, 12d der Trägereinrichtung 12 ein. Vorzugsweise laufen die Lager aus Lagerzapfen 14a, 14c und Lagerungsbuchse 12c, 12d dabei frei von anderem Schmiermittel als Wasser.

Eine Schwenkeinrichtung 15 vorliegend in Form einer senkrecht zur Bildebene der Figur 5 verlaufenden Schubstange greift an einem Steuerzapfen 14b am oberen Ende des Rotorblatts 14 an und kann so die Verschwenkung um die Schwenkachse V bewirken, wie es oben beschrieben ist.

Das Rotorblatt 14 weist vorliegend eine vorteilhafte Blattform mit einem NACA-Profil auf. Insbesondere hat es einen elliptischen Querschnitt (senkrecht zur Längsausrichtung). Seine Blattflächen sind vorzugsweise als Oberflächen einer hohlen, Spante aufweisenden schiffbaulichen Schweißkonstruktion ausgebildet, an deren Enden die Lagerzapfen 14a, 14c vorzugsweise aufgeschweißt sind.

Die Blattflächen haben eine Länge L und eine durch den Abstand einer Anströmkante 14d von einer Abströmkante 14e des Rotorblatts 14 gegebene Breite B. Das Rotorblatt hat weiterhin eine in Richtung senkrecht zur Länge L und zur Breite B gemessene (maximale) Dicke D. Die Blattbreite B ist dabei ebenso wie die Anzahl der Rotorblätter und der maximale erreichbare Schwenkwinkel γ vorzugsweise abhängig von einer jeweiligen Länge des zugehörigen Rotorarms gewählt; diese kann beispielsweise mindestens 8m, mindestens 10m oder mindestens 12m betragen und/oder höchstens 16m oder höchstens 13m.

In diesen Fällen kann die Breite B der Rotorblätter 14 beispielsweise zwischen 1m bis 3m, insbesondere im Bereich von 1,5m bis 2,5m liegen, und/oder die Dicke D im Bereich von 20cm bis 60cm, insbesondere im Bereich von 30cm bis 50cm.

Die Länge L der Blattflächen (und damit die Eintauchtiefe) ist vorzugsweise auf eine an der (vorgesehenen) Verlegungsposition vorliegende nutzbare Wassertiefe (bei Niedrigwasser) abgestimmt; sie kann beispielsweise 1m bis 2m kleiner sein als diese Wassertiefe. Ausführungsformen, bei denen die Länge L im Bereich von 6m bis 10m, insbesondere im Bereich von 7m bis 9m liegt, erlauben vorteilhaft die Montage des Meeresströmungskraftwerks 1 an vielen geeigneten Verlegungspositionen.

Für einen Abstand B₁ der Lagerzapfen 14a, 14c von der Abströmkante 14e gilt vorzugsweise 0,2B ≤ B₁ ≤ 0,3B. Alternativ oder zusätzlich kann für einen Abstand B₂ des Steuerzapfens 14b von der Abströmkante 14e vorzugsweise 0,6B ≤ B₂ ≤0,9B gelten oder sogar 0,7B ≤ B₂ ≤0,8B.

Die Figur 6a zeigt den Rotor 10 eines erfindungsgemäßen Meeresströmungskraftwerks mit Blickrichtung entlang der Rotationsachse X; die Ansicht entspricht also einem Blick von oben auf das installierte Meeresströmungskraftwerk. Sie zeigt, dass der Rotor 10 vorliegend acht am Rotator 16 befestigte Rotorarme 11 mit jeweils vier Rotorblättern 14 aufweist und bei einer linksdrehenden Umdrehungsrichtung R als Wirkungsbereich E einen Sektor von etwa 270° hat. Die Darstellung der Figur 6a zeigt den Rotor in einem Koordinatenkreuz, in dem der Wirkungsbereich E achsensymmetrisch zur x-Achse liegt.

Mittels in der Figur 6a nicht dargestellten Schwenkeinrichtungen der Rotorarme 11 sowie einer ebenfalls in der Figur 6a nicht gezeigten Schwenkeinstellungseinrichtung sind die Rotorblätter 14 in eine jeweilige Ausrichtung verschwenkbar, die von einer jeweils aktuellen Umlaufposition des jeweiligen Rotorarmes 11 abhängt. In der Figur 6a ist die jeweilige Umlaufposition durch den Winkel α zwischen dem jeweiligen Rotorarm 11 und der x-Achse gekennzeichnet; aus Gründen der Übersichtlichkeit ist der Winkel dabei in der Figur nur für einen der Rotorarme 11 bezeichnet. Die y-Achse verläuft dabei in Anströmrichtung S, wobei ihre Werte der Anströmrichtung S entgegen zunehmen. Insbesondere liegt der Winkel α = 0 auf der Umlaufposition 0, in der nur Gegendruck überwunden werden muss, und der Winkel α = 90° liegt in der Umlaufposition zur Anströmungsrichtung gewandt.

Jeweilige Winkel β (von denen in der Figur 6a ebenfalls nur einer bezeichnet ist) zeigen jeweils ausgehend von einer Ausrichtung tangential zur Umdrehungsrichtung eine Verschwenkung der Rotorblätter nach innen (also zur Rotationsachse X hin) oder nach außen (von der Rotationsachse X weg) an. Dabei sind vorliegend Werte β in Abhängigkeit von der Umlaufposition und damit vom Winkel α vorteilhaft gemäß folgender Tabelle eingestellt:

| **α** | **β** |
|---|---|
| 0° | 0° |
| 45° | 15° nach innen |
| 90° | 30° nach innen |
| 135° | 30° nach innen |
| 180° | 30° nach innen |
| 225° | 0° |
| 270° | 30° nach außen |
| 315° | 15° nach außen |
| 360°=0° | 0° |

In der Figur 6b ist verdeutlicht, wie eine Schwenkeinstellungseinrichtung 24 vorliegend in Form einer Steuerscheibe die Schwenkeinrichtungen 15 der Rotorarme in Abhängigkeit von einer jeweils aktuellen Umlaufposition des jeweiligen Rotorarms entsprechend einstellen kann:
Die Schwenkeinstellungseinrichtung 24 weist dazu eine Steuerungsrinne 24a mit einem rotations-asymmetrischen Verlauf um die Rotationsachse X auf, von der in der Figur 6b nur die Abschnitte gezeigt sind, die zu den in der Figur 6a dargestellten Positionen der Rotorarme gehören und in die jeweils ein Steuerkopf 15a am Ende einer als Schubstange ausgebildeten Schwenkeinrichtung 15 eingreift. Bei Rotation des Rotors über der Schwenkeinstellungseinrichtung 24 werden die Steuerköpfe 15a also die Steuerungsrinne 24a entlang um die Rotationsachse X geführt und nehmen dabei unterschiedliche Abstände zur Rotationsachse X ein. Dadurch werden vorliegend die unterschiedlichen jeweiligen Verschwenkungen der Rotorblätter entsprechend der obigen Tabelle bewirkt. Die Richtungstendenz ist dabei in der Figur 6b durch Pfeile gekennzeichnet.

Die Figur 7 zeigt einen am Rotator 16 eingehängten Rotorarm 11. Ein Steuerkopf 15a am Ende der aus Gründen der Übersichtlichkeit nur zum Teil und schematisch gezeigten, vorliegend als Schubstange ausgebildeten Schwenkeinrichtung 15 greift dabei in die Steuerungsrinne 24a der Schwenkeinstellungseinrichtung 24 ein. Wie in der Figur 7 durch einen Doppelpfeil gekennzeichnet ist, wird durch Rotation des Rotators 16 um die Rotationsachse X deren Abstand zum Steuerkopf 15a geändert und so eine jeweilige Einstellung der Schwenkeinrichtung 15 in Abhängigkeit von einer jeweils aktuellen Umlaufposition des jeweiligen Rotorarmes 11 bewirkt, was eine jeweilige Verschwenkung der Rotorblätter 14 impliziert.

Der Rotorarm 11 ist bei dem gezeigten Ausführungsbeispiel in Richtung parallel zur Rotationsachse X (vorliegend nach oben und unten) um einen Ausschlagswinkel verschwenkbar, was in der Figur 7 durch einen weiteren Doppelpfeil gekennzeichnet ist. Solche Verschwenkungen werden durch Wellenbewegungen und den Auftriebskörper 13 bewirkt. Die Schwenkeinrichtung 15 ist daher ebenfalls entsprechend verschwenkbar, was in der Figur 7 durch gestrichelte Positionen schematisch gekennzeichnet ist. Im dargestellten Ausführungsbeispiel weist die Schwenkeinrichtung 15 ein Gelenk auf; dieses kann insbesondere als ein Kardangelenk ausgebildet sein. Alternativ oder zusätzlich liegt die Schwenkeinrichtung 15 vorzugsweise in einer Ebene mit der Trägereinrichtung 12.

Die Ausschwenkbarkeit des Rotorarms ist vorliegend mittels einer einen hydraulischen Dämpfer umfassenden Hydraulikanlage 17 beschränkt, beispielsweise in beide Richtungen (nach oben und unten) auf je höchstens 20° oder höchstens 15°. Die Hydraulikanlage 17 wird durch jeweilige Ausschwenkungen des Rotorarms 11 bedrückt und kann so auftretenden Seegang in elektrische Energie umwandeln.

Offenbart ist ein Meeresströmungskraftwerk 1, das einen elektrischen Generator 22 und eine Turbine mit einem Stator 30 und einem um den Stator herum rotierbaren Rotor 10 zum Antreiben des elektrischen Generators 22 umfasst. Der Rotor weist dabei eine Mehrzahl an Rotorarmen 11 auf, die jeweils eine Trägereinrichtung 12 und mehrere an der Trägereinrichtung verschwenkbar gelagerte Rotorblätter 14 aufweisen.

### Bezugszeichen

- 1: Meeresströmungskraftwerk

- 10: Rotor
- 11: Rotorarm
- 12: Trägereinrichtung
- 12a: Verbindungsstrebe
- 12b: Aufhängung
- 12c, 12d: Lagerungsbuchse
- 13: Auftriebskörper
- 14: Rotorblatt
- 14a, 14c: Lagerzapfen
- 14b: Steuerzapfen
- 14d: Anströmkante
- 14e: Abströmkante
- 15: Schwenkeinrichtung
- 15a: Steuerkopf
- 16: zentrales Element/ Rotator
- 16a: Anschlag
- 17: Hydraulikanlage

- 21: Gehäuse
- 22: elektrischer Generator
- 22a: Antriebswelle
- 23: Zahnrad
- 24: Schwenkeinstellungseinrichtung
- 25: Verstelleinrichtung
- 25a: Verstellmotor
- 25b: Welle
- 25c: Zahnrad
- 26: Auftriebskörper
- 27, 28: Zahnrad

- 30: Stator
- 30a: Mast
- 30b: Fuß
- 30c: Gründung

- 100: Zentraleinheit

- B: Rotorblattbreite
- B₁: Abstand der Lagerzapfen von der Abströmkante
- B₂: Abstand des Steuerzapfens von der Abströmkante
- D: Rotorblattdicke
- E: Wirkungsbereich
- G: Meeresgrund
- L: Rotorblattlänge
- R: Umdrehungsrichtung
- S: Anströmrichtung
- V: Schwenkachse
- W: Wasseroberfläche
- X: Rotationsachse

## Patentansprüche

1. Meeresströmungskraftwerk (1), das einen elektrischen Generator (22) und eine Turbine mit einem Stator (30) und einem um den Stator herum rotierbaren Rotor (10) zum Antreiben des elektrischen Generators (22) umfasst, wobei der Rotor eine Mehrzahl an Rotorarmen (11) umfasst, die jeweils eine Trägereinrichtung (12) und mehrere an der Trägereinrichtung verschwenkbar gelagerte Rotorblätter (14) aufweisen.

2. Meeresströmungskraftwerk gemäß Anspruch 1, wobei einer, mehrere oder jeder der Rotorarme (11) eine Schwenkeinrichtung (15) umfasst, die dazu eingerichtet ist, mehrere oder alle Rotorblätter (14) des jeweiligen Rotorarms (11) simultan zu verschwenken.

3. Meeresströmungskraftwerk gemäß Anspruch 2, wobei das Meeresströmungskraftwerk zudem eine Schwenkeinstellungseinrichtung (24) umfasst, die dazu eingerichtet ist, die Schwenkeinrichtung/en (15) in Abhängigkeit von einer jeweils aktuellen Umlaufposition des jeweiligen Rotorarmes (11) einzustellen.

4. Meeresströmungskraftwerk gemäß einem der vorhergehenden Ansprüche, das zudem eine Verstelleinrichtung (25) umfasst, die dazu eingerichtet ist, das Meeresströmungskraftwerk an mit Gezeitenwechsel alternierende Anströmrichtungen (S) anzupassen.

5. Meeresströmungskraftwerk gemäß einem der vorhergehenden Ansprüche, wobei einer, mehrere oder jeder der Rotorarme (11) ausschwenkbar in Richtung parallel zur Rotationsachse (X) des Rotors (10) an einem zentralen Element (16) des Rotors befestigt ist.

6. Meeresströmungskraftwerk gemäß Anspruch 5, das mindestens einen Wellengenerator in Form einer Hydraulikanlage (17) umfasst, die dazu eingerichtet ist, durch jeweilige Ausschwenkungen des Rotorarms/der Rotorarme (11) bedrückt zu werden und damit eine jeweilige Wellenenergie in elektrische Energie umzuwandeln.

7. Meeresströmungskraftwerk gemäß einem der vorhergehenden Ansprüche, das einen oder mehrere Auftriebskörper (13, 26) umfasst, der/die dazu eingerichtet ist/sind, ein oder mehrere Element/e des Meeresströmungskraftwerks (1) an einer Wasseroberfläche (W) schwimmend zu halten.

8. Meeresströmungskraftwerk gemäß Anspruch 7, wobei der eine Auftriebskörper (13) bzw. mindestens einer der mehreren Auftriebskörper (13) an der Trägereinrichtung (12) eines jeweiligen der Rotorarme (11) fixiert ist.

9. Meeresströmungskraftwerk gemäß einem der vorhergehenden Ansprüche, wobei der Stator (30) starr ausgebildet ist.

10. Meeresströmungskraftwerk gemäß einem der vorhergehenden Ansprüche, wobei der Stator (30) einen Mast (30a) mit einem Fuß (30b) zur Verankerung am Meeresgrund (G) oder auf einer Gründung (30c) umfasst.
